# EUROPÄISCHE PATENTANMELDUNG

(11) **EP 0 665 384 A1**
(43) Veröffentlichungstag der Anmeldung: **02.08.1995**
(21) Anmeldenummer: 94116535.9
(22) Anmeldetag: 20.10.1994
(51) Int. Cl.: F16D 41/30, B62M 11/16

(54) **Steuereinrichtung für Klinkengesperre für Fahrrad-Mehrgangantriebsnaben**

(30) Priorität: 27.01.1994 DE 4402344
(71) Anmelder: FICHTEL & SACHS AG, D-97424 Schweinfurt (DE)
(72) Erfinder: Meier-Burkamp, Gerhard, Dipl.-Ing. (FH), D-97493 Bergrheinfeld (DE); Steuer, Werner, D-97424 Schweinfurt (DE)

(57) **Zusammenfassung**

Die Erfindung betrifft eine Steuereinrichtung für Klinkengesperre für Fahrrad-Mehrgangantriebsnaben, umfassend wenigstens eine nach radial innen angefederte Klinke (2a,2b) mit mindestens einer Feder (3a,3b), wobei dieses Klinkengesperre einen Ringkörper (5) in einer Drehrichtung mit einer Nabenachse (1) drehfest kuppelt mit mindestens einer zur Nabenachse (1) parallel verlaufenden Steuereinrichtung zur Steuerung des Klinkeneingriffs zwischen dem Ringkörper (5) und der Nabenachse (1), wobei die Steuereinrichtung aus mindestens einem Steuerschieber (4) besteht, der mindestens einen Nocken (4a) aufweist, mit Hilfe dessen die Klinkengesperre außer Eingriff zu bringen sind. Von Vorteil ist eine solche Einrichtung zur Schaltung von Klinkengesperren teilweise sogar unter Last und mit der Möglichkeit, mehr als ein Klinkengesperre mit einem einzigen Steuerschieber (4) aus- oder einzusteuern.

## Beschreibung

Die Erfindung betrifft eine Steuereinrichtung für Klinkengesperre insbesondere für Fahrrad-Mehrgangantriebsnaben nach dem Oberbegriff des Anspruchs 1.

Eine Steuereinrichtung für Klinkengesperre insbesondere für Fahrrad-Mehrgangantriebsnaben ist mit der EP 0 383 350 bekannt geworden, wo mittels einer von außerhalb der Nabe verdrehbaren Schalthülse kombiniert mehrere Klinkengesperre gesteuert werden können. Bei der dort beschriebenen Nabe stützen sich die Klinken an Arretierungszähnen ab, die an der Nabenachse angeformt sind, und die Klinken werden durch die Fenster, Steuerkanten und Schrägen der mehrteiligen Schalthülse aus- und eingesteuert, um den jeweiligen Klinkenverband mit den Arretierungszähnen zu lösen oder ihn herzustellen. Sollte die jeweilige Klinke belastet sein, so kann dieser Klinkenverband nur zu einem Antriebszeitpunkt mit geringem Drehmoment gelöst werden, da die Schrägen an der Schalthülse nicht beliebig flach verlaufend ausgeführt sein können. Die Steuereinrichtung der vorliegenden Erfindung hingegen hebt die Klinke mit einer optimal verlaufenden Schräge zu einem Nocken direkt aus, wobei der Winkel der Schräge den Anforderungen an die Aushebekraft angepaßt sein kann. Es ist ferner von Vorteil, daß auf einem Steuerschieber mehrere Nocken mit Schrägen angeordnet sein können, wodurch die sehr günstigen Montagemöglichkeiten für die Steuerschieber nicht beeinträchtigt werden.

Es ist daher die Aufgabe der Erfindung, eine Steuereinrichtung für Klinkengesperre in Mehrgang-Antriebsnaben zu schaffen, die mehr als ein in Achsrichtung auf einer Nabenachse angeordnetes Klinkengesperre ohne konstruktiven Mehraufwand steuern kann.

Die Lösung der Aufgabe ist im kennzeichnenden Teil des Anspruchs 1 beschrieben. Konstruktive Ausgestaltungen sind den Unteransprüchen zu entnehmen.

Ein Ausführungsbeispiel einer Steuereinrichtung für Klinkengesperre für Mehrgangnaben ist nachstehend anhand mehrerer zeichnerischen Darstellungen beschrieben. Es zeigen:
- Fig. 1: eine Steuereinrichtung für Klinkengesperre mit einer Nabenachse, einem Ringkörper, Klinken, zwei Nuten und zwei Steuerschiebern im Schnitt;
- Fig. 2: die Steuereinrichtung gem. Fig. 1 mit einer modifizierten Klinkenanordnung;
- Fig. 3: den Steuerschieber mit einem Nocken, einer vorderen Schräge und einer hinteren Schräge in perspektivischer Darstellung.

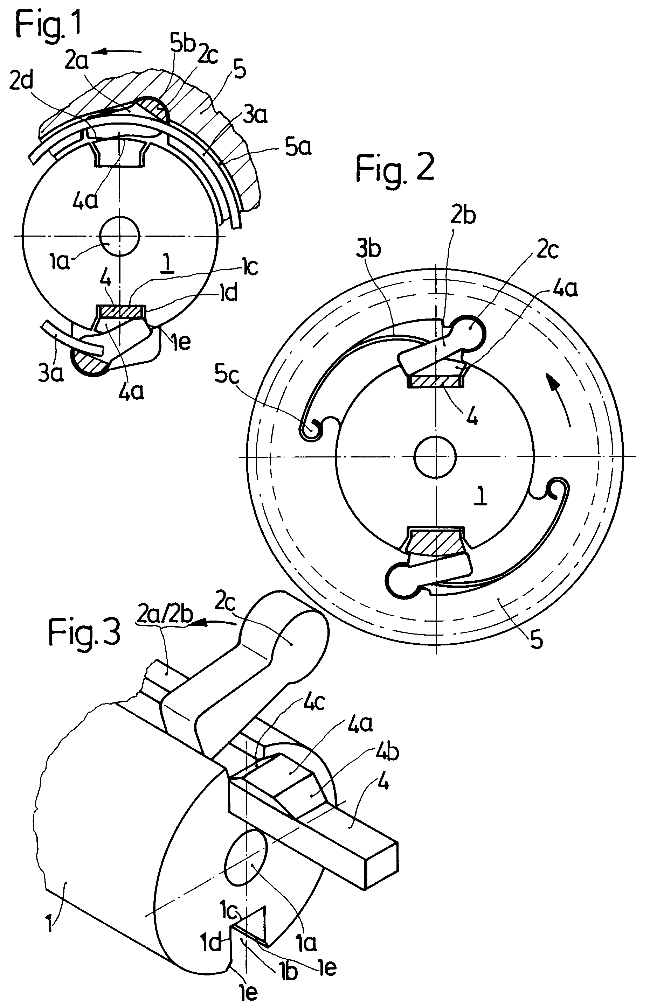

Bezeichnet man eine Nabenachse einer Mehrgangnabe für Fahrräder mit 1, so kann in dieser zu Steuerungzwecken eine Zentralbohrung 1a angeordnet sein. An mindestens einer - hier aber zwei Mantellinien der Nabenachse 1 - sind Nuten 1b angeordnet, deren Konturen von je einem Nutgrund 1c, von je zwei Nutflanken 1d und von je zwei Formschrägen 1e gebildet sind. Mit einer der beiden Formschrägen 1e arbeiten gemäß Fig. 1 Klinken 2a mit nach außen wirkender Federanlage zusammen, die einen Klinkenkopf 2c aufweisen und in Lagerstellen 5b eines Ringkörpers 5 schwenkbar gelagert sind. Die Klinken 2a sind längsgeschlitzt, so daß eine nach außen wirkende Ringfeder 3a an der verbleibenden Kante des schräg verlaufenden Nutgrundes angreifen kann, um die Klinke 2a nach innen gerichtet nach dem Prinzip einer Wippe zu verschwenken. Die Ringfeder 3a ist in einer Ringnut 5a des Ringkörpers 5 angeordnet. Gemäß Fig. 1 legt sich die Klinke 2a, veranlaßt durch die Federkraft der Ringfeder 3a nach radial innen gegen einen Nocken 4a an, der an einen Steuerschieber 4 angeformt ist und mit diesem durch eine vordere Schräge 4b und eine hintere Schräge 4c formgebend verbunden ist.

Wird gemäß Fig. 3 der Steuerschieber 4 mit seinem Nocken 4a gegen die Klinke 2a geschoben, so wird die hintere Schräge 4c gegenüber der Klinke 2a zuerst wirksam, bis sich diese ganz auf die Höhe des Nockens 4 empor gehoben hat. Der Nocken 4 liegt nun unter der Klinke 2a, wodurch diese ihren Eingriff mit der Schräge 1e verliert und in der Drehrichtung, in der sie sich vorher abgestützt hatte, ohne Widerstände frei drehen kann. Hierfür sorgt zum einen die obere bogenförmige Kontur des Nockens 4a, die sich in etwa an die kreisrunde Kontur der Nabenachse 1 angleicht. Zum anderen kann an der Klinke 2a eine Rampe 2d angeformt sein, die die Spalten zwischen dem Nokken 4a und dem Übergang der Schräge 1e zum zylindrischen Teil der Nabenachse 1 bei Drehung des Ringkörpers 5 in Abstützdrehrichtung überwinden hilft.

Die Fig. 2 zeigt eine Variante der Ausbildung der Klinkenfederung zu der beschriebenen Klinkenfederung gemäß Fig. 1. Hier ist es wie dort das Ziel, eine Klinke 2b mit einer nach innen wirkenden Anlage einer Schenkelfeder 3b nach radial innen vorzuspannen und mit den Schrägen 1e in Eingriff zu bringen. Die Schenkelfeder 3b ist in einer Befestigungsstelle 5c formschlüssig angeordnet und spannt die Klinke 2b mit ihrem freien Schenkel vor.

Es ist für die Ausbildung der Mehrgangnabe von Vorteil, daß die Nabenachse 1 eine Zentralbohrung 1a aufweist, weil diese eine weitere Steuerungsmöglichkeit für die Betätigung der Steuerschieber 4 über hier nicht gezeigte Schubklötze bildet, die durch Längsschlitze mit den Steuerschiebern 4 verbunden sein können. Ferner können in der Zentralbohrung 1a Federn angeordnet werden, gegen die sich die Steuerschieber 4 ebenfalls über Schubklötze abstützen können. Die Steuerung der Steuerschieber 4 ist aber auch direkt unter Zuhilfenahme einer Schalteinrichtung an mindestens einem Ende der Nabenachse 1 möglich.

## Patentansprüche

1. Steuereinrichtung für Klinkengesperre für Fahrrad-Mehrgangantriebsnaben, umfassend wenigstens eine nach radial innen angefederte Klinke (2a,2b) mit mindestens einer Feder (3a,3b), wobei dieses Klinkengesperre einen Ringkörper (5) in wenigstens einer Drehrichtung mit einem anderen Rotationskörper, insbesondere einer Nabenachse (1) drehfest kuppelt mit mindestens einer zur Nabenachse (1) parallel verlaufenden Steuereinrichtung zur Steuerung des Klinkeneingriffs zwischen dem Ringkörper (5) und der Nabenachse (1), dadurch gekennzeichnet, daß die Steuereinrichtung mindestens einen Steuerschieber (4) umfaßt, der in mindestens einer Nut (1b) mit einem Nutgrund (1c) und Nutflanken (1d) entlang einer Mantellinie der Nabenachse (1) längsverschieblich angeordnet ist und mindestens einen Nocken (4a) aufweist, der mindestes eine Klinke (2a,2b) in oder außer Eingriff bringen kann.

2. Steuereinrichtung nach Anspruch 1, dadurch gekennzeichnet, daß die Klinken (2a,2b) im Ringkörper (5) gelagert sind und sich an der Nutflanke (1d) gegen die Nabenachse (1) zur Drehmomentübertragung abstützen.

3. Steuereinrichtung nach den Ansprüchen 1 und 2, dadurch gekennzeichnet, daß die Nutflanke (1d) eine Formschräge (1e) aufweist.

4. Steuereinrichtung nach den Ansprüchen 1 bis 3, dadurch gekennzeichnet, daß der Steuerschieber (4) je eine in Schieberichtung zum Nocken (4a) hin verlaufende vordere Schräge (4b) und hintere Schräge (4c) aufweist.

5. Steuereinrichtung nach den Ansprüchen 1 bis 4, dadurch gekennzeichnet, daß der Nocken (4a) dem Querschnitt der Nut (1b) angepaßt ist, wobei die seitliche Kontur den Nutflanken (1d) sowie den Formschrägen (1e) und die Höhe des Nockens (4a) in etwa dem Kreisumfang der Nabenachse (1) angenähert sind.

6. Steuereinrichtung nach den Ansprüchen 1 bis 5, dadurch gekennzeichnet, daß die Klinken (2a) eine Rampe (2d) aufweisen.
